# EUROPEAN PATENT SPECIFICATION

(11) **EP 0 514 121 B1**
(45) Date of publication and mention of the grant of the patent: **21.08.1996**
(21) Application number: 92304247.7
(22) Date of filing: 12.05.1992
(51) Int. Cl.: G21C 3/328, G21C 3/04, G21C 3/16

(54) **Nuclear fuel assembly comprising two-diameter fuel rods**
Kernbrennstabbündel mit Brennstäben von zwei Durchmessern
Assemblage de combustible ayant des barreaux de combustible avec deux diamètres

(30) Priority: 17.05.1991 US 701916
(43) Date of publication of application: 19.11.1992
(73) Proprietor: GENERAL ELECTRIC COMPANY, Schenectady, NY 12345 (US)
(72) Inventor: Matzner, Bruce, San Jose, California 95125 (US); Reese, Anthony Paul, San Jose, California 95136 (US); Johansson, Eric Bertil, Wrightsville Beach, North Carolina 28480 (US)
(74) Representative: Lupton, Frederick

(56) References cited:
- DE-A- 2 522 503
- DE-A- 3 901 504
- US-A- 3 211 627
- PATENT ABSTRACTS OF JAPAN, vol. 14, no. 296 (P-1067) 26 June 1990 ; & JP-A-20 091 597

## Description

This invention relates to fuel rods for boiling water nuclear reactors. More specifically, a fuel rod is disclosed having a two diameter construction for use within a fuel bundle within a boiling water nuclear reactor.

### BACKGROUND OF THE INVENTION

Ueda Japanese Kokai Patent No. Sho 52-50498 of April 22, 1977 discloses a fuel bundle having partial length rods for use in a boiling water nuclear reactor. These partial length rods are arrayed in side-by-side relation so as to define large central voids in the center of a fuel bundle within a boiling water reactor. The large central void defined by the partial length rods is in the upper two-phase region of the disclosed fuel bundle and has the shape of a cone.

In a first embodiment of Ueda, the cone in the upper portion of the fuel bundle is filled with a correspondingly large central conical water rod. In a second - and apparently preferred embodiment of Ueda - the large central conical void is vacant. This large central conical void permits the discharge of steam within the fuel bundle.

The Ueda patent sets forth the utility of the design as permitting an improved moderator-to-fuel ratio in the upper two-phase region of the fuel bundle. This effect apparently applies to both the cold and hot operating state of the fuel bundle.

The Ueda disclosure continues. It points out that in addition to the conical voids, other expedients can be used. Specifically the suggestion is made as follows:

"In addition, similar effects as above can be achieved by using fuel rods with changed diameter in the axial direction, i.e., larger outer diameter of the fuel rods in the lower portion of the fuel assembly, and small diameter of the fuel rods in the upper portion of the fuel assembly." No illustration of this embodiment is provided. Further, Ueda does not disclose a practical design of the suggested fuel rods.

In European Patent Application Publication No. 336,203 there is disclosed a fuel bundle for a boiling water nuclear reactor also having a plurality of partial length rods. Unlike Ueda, the part-length rods are arrayed so as to define a plurality of steam vent channels in the upper two-phase region of the fuel bundle. Utility is set forth to include (but is not limited to) improved moderator-to-fuel ratio in the upper two-phase region of the bundle and reduced pressure drop in the upper two-phase region of the fuel bundle. The reduced pressure drop enables the disclosed fuel bundle design to enjoy better stability during operation.

### SUMMARY OF THE INVENTION

We are aware that the large single central void region in a fuel bundle for a boiling water nuclear reactor creates concerns related to the critical power of the individual fuel rods. Specifically, such large single central voids tend to entrain the water (which is both coolant and moderator) upwardly in the void region in excessive amounts. This produces large flow rates in the center of the fuel bundle with corresponding lower flow rates at the periphery of the fuel bundle. As a result, the peripheral fuel rods reach their critical power limits at lower overall fuel bundle coolant flow rates. The entire resulting fuel bundle design is therefore limited.

In a nuclear fuel bundle for a boiling water reactor, the prior art suggested concept of two diameter fuel rods forming the bundle array is disclosed in a practical design as, for example, in US-A-5 009 840. A two diameter fuel rod is disclosed having a large diameter bottom tube for holding a column of correspondingly large diameter fuel pellets at the fuel rod bottom, a smaller diameter top tube for holding correspondingly smaller diameter pellets at the top of the fuel rod, and a reducer situated between the top of the large diameter lower fuel tube and the bottom of the smaller diameter upper fuel tube. The lower column of larger diameter fuel pellets is supported on a spring at its lower end and biased directly against the reducer at its upper end; the upper column of the smaller diameter fuel pellets is supported at its upper end as close as possible to the underlying large diameter fuel pellets. Both tubes are conventionally sealed and constructed at their distal ends from the reducer. Various kinds of reducer sections are disclosed. These reducer sections include a bell reducer of solid metallic construction, a tapered cladding tube, and, finally, telescoping cladding tubes welded together. There results a fuel bundle which has a uniform distribution of fuel and coolant with resultant uniform critical power response, no regions of nonuniform vapor flow, and improved flow area in the upper two-phase region of the bundle.

### OTHER OBJECTS, FEATURES AND ADVANTAGES

An object of this invention is to disclose a practical construction of a two-diameter fuel rod with a single-diameter change. According to this aspect of the invention, a fuel rod is disclosed having a lower large diameter tube, an upper small diameter tube, and a reducer therebetween. The reducer tapers from an outside diameter matching the diameter of the large lower tube to a reduced diameter matching the diameter of the smaller upper tube. The reducer is provided with a central bore to equilibrate the pressure of the gasses of fission between the large diameter tube and the small diameter tube. The upper tube is loaded with a column of relatively small diameter fuel pellets. The lower tube is loaded with a column of relatively larger diameter fuel pellets. This lower larger diameter column of fuel pellets is supported at the bottom of the fuel rod and biased upwardly to the reducer. It is preferred to provide the lower spring with a spring stop (such as a fission gas absorption chamber) which limits the downward motion of the lower column of fuel pellets in the event of spring failure. There results a two-diameter fuel rod construction having the narrowest practicable gap between the upper and lower fuel pellet columns.

A primary advantage of the two-diameter fuel rod design is that a fuel bundle is disclosed in which the weight of fuel can be increased. This increase is realized over fuel bundles having part-length rods. At the same time, improved fuel-to-moderator ratio at all operating states of the boiling water nuclear reactor is maintained.

A further advantage of the two-diameter fuel rod design is that a more uniform flow within the fuel bundle occurs. Simply stated, fuel bundles having steam vent volumes promote nonuniformity of fluid flow. In such fuel bundles having steam vent volumes, it is hoped that steam will preferentially vent to the void volumes with liquid moderator concentrating into the surrounding uninterrupted fuel rod matrix. With the present disclosure, the cross-sectional area available for fluid flow in the lower portion of the fuel bundle and the cross section for flow in the upper portion of the fuel bundle remain largely unchanged - with the exception of the small increase in flow area resulting from the reduction in fuel rod diameter from a large diameter at the bottom of each fuel rod of the fuel bundle to a small diameter at the top of each fuel rod of the fuel bundle.

An advantage of the small gap in the fuel columns across the bell reducer is that end of fuel column peaking is held to a minimum. Specifically, the two ends of the columns are in sufficient proximity to one another that they become self-shielding with respect to ambient neutron flux. Peaking at the ends of the columns in the middle of the fuel bundle is held to a minimum.

It will be noted that the bottom of the small diameter fuel pellet column and the top of the large diameter fuel pellet column define a gap. This gap is in the middle of the fuel bundle. This middle of the fuel bundle is normally under a high thermal neutron flux. A large gap between the bottom portion of the upper small diameter fuel pellet column and the upper portion of the lower large diameter fuel pellet column permit the ambient thermal neutron flux to see the end sections of the adjacent fuel pellets. This will result in undesirable increased reaction at these locations - which reaction, if mitigated by reduced enrichment, detracts from the output of the fuel bundle.

An additional advantage of the disclosed design is that the fuel pellets at the top of the large diameter fuel pellet column and the fuel pellets at the bottom of the small diameter fuel column remain in good thermodynamic communication with the exterior of the column. There results a reduced tendency for the fuel pellets at the top of the large diameter column and the fuel pellets at the bottom of the small diameter column to overheat.

A further advantage of the disclosed rod construction can be realized in assembly. Specifically, only two sizes of nuclear fuel pellets are required. These specific pellets are loaded from opposite ends of the constructed fuel rods in two different diameters of tubes. Biasing of the loaded fuel is toward the bell reducer by springs acting on conventional seals at the distal ends of the tubes. All seals and welds are conventional. There results a simplified fuel rod construction.

A further object of this invention is to incorporate the disclosed fuel rod in a fuel bundle. According to this aspect of the invention, the disclosed two-diameter rods are loaded to a fuel bundle with support on a lower tie plate and full extension to an upper tie plate, with the remainder of the construction of the fuel bundle at the channel and spacers being conventional.

An additional object of this invention is to disclose a fuel bundle having axially staggered changes from the large diameter portion of the fuel rods to the small diameter portion of the fuel rods. According to this aspect, at least two configurations of fuel rods are utilized. A first fuel rod contains the transition between the large diameter bottom portion and the small diameter top portion at first elevation. A second fuel rod contains the transition between the large diameter bottom portion and the small diameter top portion at a second and slightly different elevation. There results a fuel bundle wherein the flux density at the transition between the fuel rods is staggered in elevation across the fuel bundle, mitigating the effects of any lack of self-shielding at the adjoining ends of the fuel columns.

An advantage of a fuel bundle having the disclosed fuel rods is that it incorporates an improved thermal hydraulic design having a uniform distribution of fuel and coolant with optimum critical power, does not include regions of nonhomogeneous high vapor flow, and includes an expanded area for vapor flow in the upper two-phase region of the fuel bundle.

An additional object of this invention is to disclose alternate transitions between the lower large diameter fuel rod portion and the upper small diameter fuel rod portion. According to this aspect of the invention, reducers are disclosed which include solid metallic reducers, tapered cladding, and, finally, cladding that telescopes one smaller diameter cladding section into another larger diameter cladding section with a weld occurring between the cladding sections to provide the required seal.

### BRIEF DESCRIPTION OF THE DRAWINGS

Other objects, features and advantages of this invention will become more apparent after referring to the following specification and attached drawings in which:
Fig. 1A is a perspective view in partial section of a fuel bundle having a cluster of contained fuel rods with relatively large diameter bottom portions, and small diameter top portions, the fuel rods being conventionally placed in a fuel bundle having upper and lower tie plates with a surrounding channel for confining fluid flow within the channel around the cluster of fuel rods between the tie plates for the generation of steam;
Fig. 1B is an enlarged detail of the middle portion of the fuel bundle showing the transition section of several fuel rods from their larger diameter bottom section to the smaller diameter upper section;
Fig. 2 is a section showing only pertinent portions of the elevation of the fuel rods utilized for this invention so that the differences in construction can be fully distinguished from prior art fuel rods; and,
Fig. 3 is a section of a fuel bundle similar to Fig. 1B showing a fuel bundle wherein the transitions between the upper end of the large diameter fuel pellet columns and the lower end of the small diameter fuel pellet columns are staggered between adjacent fuel rods.
Fig. 4A is a side elevation section of a fuel rod having a taper at the transition between the lower larger diameter fuel rod and the upper smaller diameter fuel rod, the design utilizing two sizes of fuel pellets;
Fig. 4B is a side elevation section of a fuel rod having a taper at the transition between the lower larger diameter fuel rod and the upper smaller diameter fuel rod, the design utilizing two sizes of fuel pellets with a transition fuel pellet utilized therebetween; and,
Fig. 5 is a tapered fuel rod developed from upper and lower fuel rod sections fitted in telescoping relation at their points of transition.

### DESCRIPTION OF THE PREFERRED EMBODIMENT

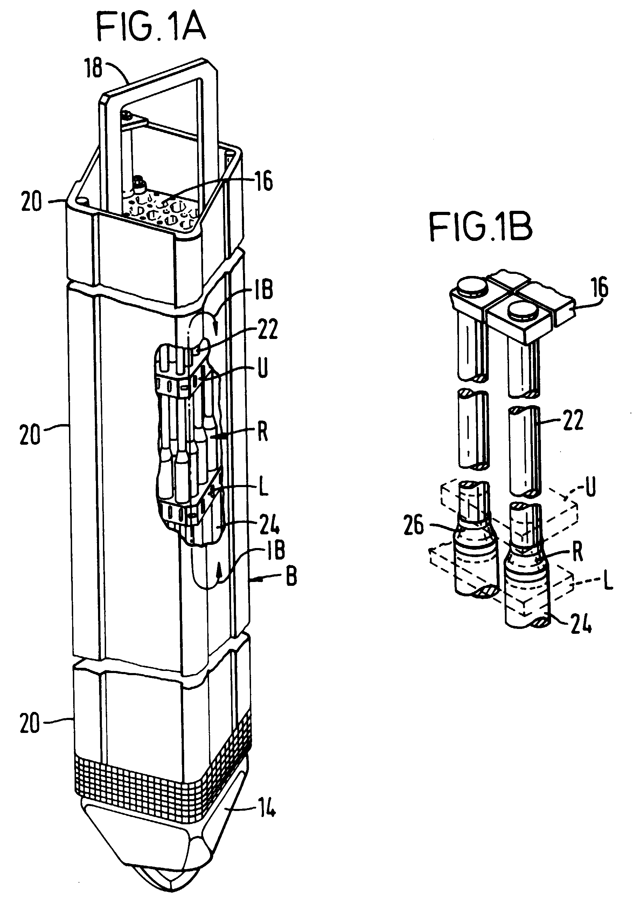

Referring to Fig. 1A, a fuel bundle B is illustrated. The fuel bundle B includes lower tie plate 14, upper tie plate 16 with an attached handle 18 for manipulating the bundle. Channel 20 defining a square interior extends from upper tie plate 16 down to lower tie plate 14 and surrounds a matrix of rods R. As will hereinafter be set forth in more detail, rods R have two diameters. The rods have a large diameter bottom portion 24 and a small diameter upper portion 22.

Referring to Fig. 1B, the tapered portion of the rods R is illustrated. Specifically, a bell reducer 26 is shown between the upper small diameter portions 22 and the lower large diameter portions 24.

The construction herein illustrated includes a schematic representation of an upper spacer U and a lower spacer L. Typically, there are approximately 6 to 8 such spacers distributed along the length of the fuel bundle.

It will be realized that the fuel bundle will consist of an array of such fuel rods. Such arrays can vary in density from 7 by 7 to 12 by 12 arrays. We prefer arrays in the range of 9 by 9 to 10 by 10.

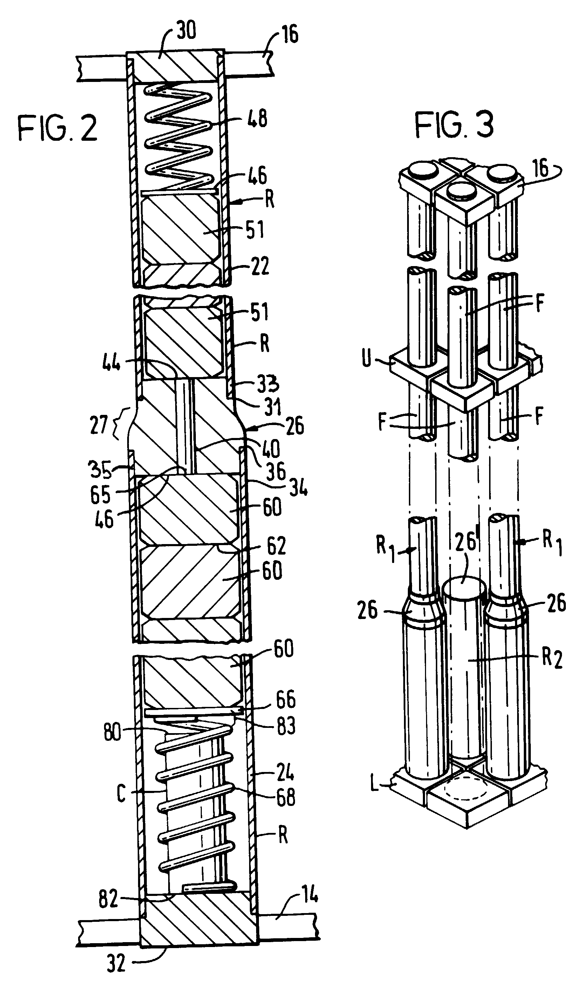

Having set forth with generality the construction of the fuel bundles utilizing the two-diameter fuel rods R, the detailed construction of the fuel rods R can be set forth with respect to Fig. 2. Referring to Fig. 2, a typical fuel rod having a sealed upper end 30 braced at upper tie plate 16 extends down to a sealed lower end 32 at lower tie plate 14. The rod is sectioned to illustrate a medial portion of the fuel rod R at the point of transition between the large diameter lower tube 24 and the upper smaller diameter tube 22.

It will be seen that a bell reducer 26 is utilized. The bell reducer has a transition surface 27, which transition surface provides a gradual and smooth transition on the outside surface between large diameter bottom tube 24 and upper small diameter tube 22.

It is useful to consider the construction of the bell reducer 26 in detail.

Bell reducer 26 has an upper smaller diameter 31. This upper smaller diameter 31 matches the outside diameter of small diameter tube 22.

The bell reducer has a lower larger diameter section 34. This larger diameter section 34 matches the outside diameter of tube 24.

The bell reducer is notched at a first notch 33. This notch 33 includes capability for a close fit into the interior diameter of upper small diameter tube 22. Bell reducer 26 has in its bottom portion a similar notch 35. Notch 35 is configured for close fit into the interior diameter of large diameter bottom tube 24.

Centrally of the bell reducer there is configured a passage 40. Passage 40 permits fission gasses to equilibrate between the sealed chamber formed by upper small diameter rod portion 22 and lower large diameter rod portion 24.

The bell reducer at the surface 44 supports a column of small diameter pellets 51. Pellets 51 are conventionally biased onto surface 44 of bell reducer 26 at ring 46 by coil spring 48. In this respect, the construction of the rod R illustrated in Fig. 2 is very similar to the prior art.

Lower large diameter tube 24 supports a column of large diameter pellets 60. Large diameter pellets 60 are supported at a ring 66 by a spring 68. Typically pellets 60 are biased into direct contact with lower surface 46 of the bell reducer. It will be realized at this point that the support of the pellets differs radically from prior art constructions. Having spring 68 bias column of pellets 60 upwardly against surface 46 of bell reducer 26 constitutes an unusual construction in the nuclear industry. There is an important reason for this construction.

When fuel pellets such as pellets 51 or 60 reside in a continuous column within a reactor and undergo nuclear fission, a population of thermal neutrons surrounds the fuel pellets and assures continuance of the nuclear reaction. At the interface between the pellets (for example, interface 62 between pellets 60 in Fig. 2) the fissionable material within adjacent pellets serves to shield itself. That is to say, the discrete nuclear pellets at their interface well within a column prevent high neutron densities from causing rapid burning of the nuclear fuel.

Where a column of fuel ends such as at end 65 of the column of fuel pellets 60 such self-shielding is not present. Accordingly, such pellets can become hot spots in the pellet column, limiting the performance of the fuel rod.

With the disclosed bell reducer 26, the distance between the small diameter lower fuel pellet 51 and the large diameter upper fuel pellet 60 is maintained at a minimum. Maintenance of this distance at a minimum assures the maximum possible self-shielding at the upper column of smaller diameter fuel pellets 51 and the lower column of large diameter pellets 60.

We expressly limit a permitted gap between the smaller diameter lower fuel pellet 51 and the large diameter upper fuel pellet 60. This gap should be maintained at a minimum. It should not exceed 228,6 mm (9 inches), should be less than 127 mm (5 inches) and preferably is in the range of about 25,4 mm (one inch).

It can also be seen why spring 68 is placed at the bottom of large diameter fuel pellets 60. By moving the spatial interval necessary for biasing the upper column of fuel pellets 60 to the lower portion of the fuel bundle adjacent end plug 32 at lower tie plate 14, minimum gap between the columns of fuel pellets in the vicinity of bell reducer 26 is assured.

It is often required in fuel rods R to have a chamber C for absorbing the gasses of nuclear fission. As illustrated here, the coil spring 68 has a chamber C placed within the spring. Chamber C is of sturdy construction so that it can support the full weight of pellet column 60 between the top surface 80 of the chamber and the bottom surface 82.

It can be seen that a small spatial gap 83 is maintained between ring 66 and surface 80 of chamber C. This small spatial gap is utilized in the event that spring 68 fails. Upon failure of spring 68, any gap between the upper pellet 60 and the interface 46 of bell reducer 26 will be maintained at an absolute minimum.

It is to be understood that of necessity we restrict the two-diameter rod construction to only two diameters of fuel tube. These diameters are upper small diameter tube 22 and lower large diameter tube 24.

A few remarks about the construction of the fuel rod R can be made. Typically, bell reducer 26, upper small diameter portion 22 and lower large diameter portion 24 would first be joined. These rod portions would be joined by welds at surfaces 30, 36 to form a sealed construction between the upper tube 22 and the lower tube 24.

Thereafter, the respective upper tube 22 and lower tube 24 would be loaded with their respective fuel pellets 51, 60 from both ends. Finally, the respective spring and end plugs 30 and 32 would be inserted and conventionally sealed, as by welding, with respect to the ends of the tubes 22, 24. A gas tight fuel rod construction would result.

Referring to Fig. 3, three fuel rods are shown taken from a fuel bundle that has the transition between the large diameter bottom portion of fuel rods and the small diameter top portion of fuel rods staggered between adjacent fuel rods. Specifically, rods R1 have their respective bell reducer 26 at a lower elevation. Rods R2 - only one of which is shown - has its bell reducer 26' at a second and higher elevation. This design enables mitigation of the effects of the thermal neutron flux penetration to the ends of the fuel pellet columns in the medial portion of the fuel bundle.

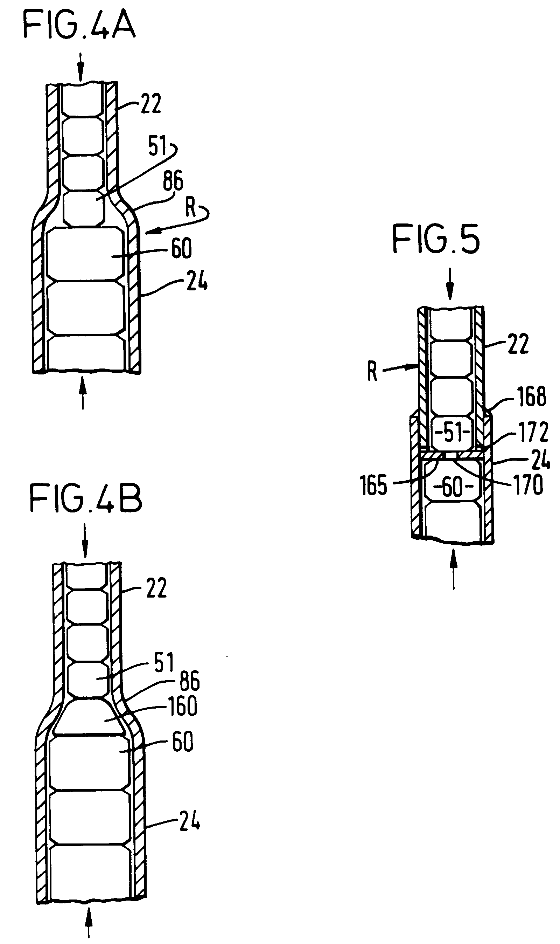

It is possible to extrude tubes utilized in fuel rod cladding with a taper. Figs. 4A and 4B illustrate such tubes. In Fig. 4A, large diameter pellets 60 are biased upwardly by a spring 68 (see Fig. 2) having sufficient force to bias upward pellet 60 directly against the taper 86 of rod R. This embodiment defines a spatial interval between the lower pellet 51 and taper 86, which spatial interval can retard the transfer of the heat of lower pellet 51 through the wall of the fuel rod R.

Referring to Fig. 4B, larger diameter fuel pellet column includes a tapered transition pellet 160. Tapered transition pellet 160 has shoulder sloped to wedge into the interior of the taper 86 between the larger lower diameter portion of the fuel rod 24 and the upper smaller diameter portion of the fuel rod 22.

The transition pellet can include fuel, fuel containing a burnable poison, moderator or moderator containing a burnable poison.

Referring to Fig. 5, an alternate construction of the taper is suggested. In this case, upper smaller diameter fuel rod 22 fits on a "telescoping" fit interior of lower large diameter fuel rod 24. Before such fitting occurs, the bottom portion of smaller diameter rod 22 is closed at small disc plug 165. Disc plug 165 includes an aperture 170 for equilibrating any fission gas pressure, this disc being fastened to the bottom of upper smaller diameter fuel rod 22 by a weld 172. Weld 172 does not need to be a sealed weld.

Lower large diameter rod 24 is welded to and sealed about upper smaller diameter rod 22 at weld 168. Weld 168 is beveled so as to provide the necessary gradual transition between the upper smaller diameter tube 22 and the lower large diameter tube 24. A sealed fuel rod assembly R results.

## Claims

1. A fuel rod for a nuclear fuel bundle (B) of a boiling water nuclear reactor having a plurality of fuel rods (R), the rod comprising:
a larger diameter bottom tube (24) for holding a column of correspondingly larger fuel pellets (60) at the bottom of the fuel rod; a smaller diameter top tube (22) for holding a column of correspondingly smaller fuel pellets (51) at the top of the fuel rod; and
means (30,32) for sealing said bottom and top tubes at distal ends of the fuel rod, characterized by:
a reducer (26) situated between the larger diameter bottom tube (24) and the smaller diameter top tube (22), said reducer tapering from the larger outside diameter of the bottom tube to the smaller outside diameter of the top tube;
means (68,80) for supporting the column of larger fuel pellets in the bottom tube and biasing the column of larger fuel pellets toward the upper end of the bottom tube adjacent the reducer (26) whereby the column of larger fuel pellets in the bottom tube and the column of smaller fuel pellets in the top tube are positioned end to end with the closest possible spatial interval across said reducer for minimizing peaking at the ends of the columns adjacent the reducer.

2. The fuel rod recited in claim 1 having biasing means (48) in the top tube for supporting the lower end of said column of smaller fuel pellets immediately adjacent the lower end of said smaller diameter top tube.

3. The fuel rod recited in claims 1 or 2, said reducer (26) having a notch (35) in its enlarged diameter lower portion for receiving one end of the larger diameter bottom tube (24) and a notch (33) in its smaller diameter upper portion for receiving one end of the smaller diameter top tube (22).

4. The fuel rod recited in any preceding claim, said column of smaller pellets in the top tube (22) being supported by the upper end of the reducer (26).

5. The fuel rod recited in claim 1, the top tube being supported in an upper tie plate (16) of said fuel bundle.

6. The fuel rod recited in claim 1, said reducer comprising an extrusion (86) of said top tube from said bottom tube.

7. The fuel rod recited in claim 6, having a tapered transition pellet (160) in the extrusion (86) between the top tube and the bottom tube.

8. The fuel rod recited in claim 1, said top tube (22) telescoping into said bottom tube (24) and a disc plug (165) separating the smaller pellets from the larger pellets.

9. The fuel rod recited in claim 1, having a passageway (40) formed in the reducer.

10. The fuel rod recited in claim 8, having an aperture (170) formed in the disc plug (165).

11. The fuel rod recited in claim 1, some different diameter fuel rods having a reducer at a different elevation than other different diameter fuel rods.

## Patentansprüche

1. Brennstab für ein Brennelement (B) eines Siedewasser-Kernreaktors mit einer Vielzahl von Brennstäben (R), wobei der Stab umfaßt:
ein unteres Rohr (24) größeren Durchmessers zum Auhehmen einer Säule entsprechend größerer Brennstoffpellets (60) am Boden eines Brennstabes, ein oberes Rohr (22) geringeren Durchmessers zum Aufnehmen einer Säule entsprechend kleinerer Brennstoffpellets (51) am Oberteil des Brennstabes und
eine Einrichtung (30,32) zum Abdichten des unteren und des oberen Rohres an den distalen Enden des Brennstabes, gekennzeichnet durch:
ein Reduzierstück (26), das zwischen dem unteren Rohr (24) größeren Durchmessers und dem oberen Rohr (22) geringeren Durchmessers angeordnet ist und sich vom größeren Außendurchmesser des unteren Rohres zum geringeren Außendurchmesser des oberen Rohres verjüngt und
eine Einrichtung (68,80) zum Abstützen der Säule aus größeren Brennstoffpellets im unteren Rohr und zum Vorspannen der Säule größerer Brennstoffpellets zum oberen Ende des unteren Rohres benachbart dem Reduzierstück (26), wodurch die Säule größerer Brennstoffpellets im unteren Rohr und die Säule kleinerer Brennstoffpellets im oberen Rohr Ende an Ende bei geringst möglichem räumlichem Abstand im Beduzierstück angeordnet sind, um eine Spitze an den Enden der Säulen benachbart dem Reduzierstück zu minimieren.

2. Brennstab nach Anspruch 1, mit einer Einrichtung zum Vorspannen (48) im oberen Rohr zum Abstützen des unteren Endes der Säule aus kleineren Brennstoffpellets unmittelbar benachbart dem unteren Ende des oberen Rohres geringeren Durchmessers.

3. Brennstab nach Anspruch 1 oder 2, worin das Reduzierstück (26) eine Aussparung (35) in seinem unteren Teil größeren Durchmessers zur Aufnahme eines Endes des unteren Rohres (24) größeren Durchmessers und eine Aussparung (33) in seinem oberen Teil geringeren Durchmessers zur Aufnahme eines Endes des oberen Rohres (22) kleineren Durchmessers aufweist.

4. Brennstab nach einem vorhergehenden Anspruch, worin die Säule aus kleineren Pellets im oberen Rohr (22) durch das obere Ende des Reduzierstückes (26) getragen ist.

5. Brennstab nach Anspruch 1, worin das obere Rohr in einer oberen Gitterplatte (16) des Brennelementes abgestützt ist.

6. Brennstab nach Anspruch 1, worin das Reduzierstück einen Strang (86) des oberen Rohres von dem unteren Rohr umfaßt.

7. Brennstab nach Anspruch 6, mit einem verjüngten Übergangspellet (160) in dem Strang (86) zwischen dem oberen Rohr und dem unteren Rohr.

8. Brennstab nach Anspruch 1, worin sich das obere Rohr (22) teleskopartig in das untere Rohr (24) erstreckt und ein Scheibenstopfen (165) die kleineren Pellets von den größeren Pellets trennt.

9. Brennstab nach Anspruch 5, mit einem in dem Reduzierstück ausgebildeten Durchgang (40).

10. Brennstab nach Anspruch 9, mit einer in dem Scheibenstopfen (165) ausgebildeten Öffnung (170).

11. Brennstab nach Anspruch 1, bei dem einige Brennstäbe mit unterschiedlichem Durchmesser ein Reduzierstrück in einer anderen Höhe aufweisen als andere Brennstäbe mit unterschiedlichem Durchmesser.

## Revendications

1. Barreau de combustible pour une grappe (B) de combustible nucléaire d'un réacteur à eau bouillante qui contient une pluralité de barreaux de combustible (R), le barreau comprenant :
- une tube inférieur (24) de gros diamètre qui contient de façon correspondante une colonne de pastilles de combustible relativement grosses (60) à la base du barreau de combustible,
- un tube supérieur (22) de petit diamètre qui contient de façon correspondante une colonne de pastilles de combustible relativement petites (51) au sommet du barreau de combustible, et
- des moyens (30, 32) pour sceller lesdits tubes supérieur et inférieur au niveau des extrémités distales dudit barreau de combustible,
caractérisé par :
- un réducteur (26) situé entre le tube inférieur (24) de gros diamètre et le tube supérieur (22) de petit diamètre, ledit réducteur s'effilant du diamètre extérieur plus grand dudit tube inférieur au diamètre extérieur plus petit dudit tube supérieur,
- des moyens (68, 80) pour soutenir la colonne de pastilles de combustible relativement grosses dans le tube inférieur et pousser la colonne de pastilles de combustible relativement grosses vers l'extrémité supérieure du tube inférieur, à proximité du réducteur (26), si bien que la colonne de pastilles de combustible relativement grosses se trouvant dans le tube inférieur et la colonne de pastilles de combustible relativement petites se trouvant dans le tube supérieur sont placées bout à bout de part et d'autre dudit réducteur, avec l'intervalle spatial le plus petit possible afin de minimiser l'apparition de pics aux extrémités des colonnes adjacentes au réducteur.

2. Barreau de combustible selon la revendication 1, comportant un moyen de poussée (48) dans le tube supérieur pour supporter l'extrémité inférieure de ladite colonne de pastilles de combustible plus petites, à proximité immédiate de l'extrémité inférieure dudit tube supérieur de petit diamètre.

3. Barreau de combustible selon la revendication 1 ou 2, ledit réducteur (26) comportant une encoche (35) dans sa partie inférieure de plus grand diamètre, destinée à recevoir une extrémité du tube inférieur de plus gros diamètre (24), et une encoche (33) dans sa partie supérieure de plus petit diamètre, destinée à recevoir une extrémité du tube supérieur de petit diamètre (22).

4. Barreau de combustible selon l'une quelconque des précédentes revendications, ladite colonne de pastilles plus petites se trouvant dans le tube supérieur (22) étant supportée par l'extrémité supérieure du réducteur (26).

5. Barreau de combustible selon la revendication 1, le tube supérieur étant soutenu dans une plaque supérieure d'assemblage (16) de ladite grappe de combustible.

6. Barreau de combustible selon la revendication 1, ledit réducteur comprenant une extrusion (86) dudit tube supérieur depuis ledit tube inférieur.

7. Barreau de combustible selon la revendication 6, qui comporte une pastille de transition conique (160) placée dans l'extrusion (86) entre le tube supérieur et le tube inférieur.

8. Barreau de combustible selon la revendication 1, ledit tube supérieur (22) se téléscopant dans ledit tube inférieur (24) et un bouchon en forme de disque (165) séparant les petites pastilles des grosses pastilles.

9. Barreau de combustible selon la revendication 1, qui comporte une voie de passage (40) formée dans le réducteur.

10. Barreau de combustible selon la revendication 8, qui comporte une ouverture (170) formée dans le bouchon en forme de disque (165).

11. Barreau de combustible selon la revendication 1, certains barreaux de combustible de diamètre différent ayant un réducteur à une hauteur différente d'autres barreaux de combustible de diamètre différent.
